# EUROPÄISCHE PATENTANMELDUNG

(11) **EP 3 107 047 A1**
(43) Veröffentlichungstag der Anmeldung: **21.12.2016**
(21) Anmeldenummer: 16173988.3
(22) Anmeldetag: 10.06.2016
(51) Int. Cl.: G06Q 10/06, G02B 23/24, G03B 37/00

(54) **SYSTEM UND VERFAHREN ZUR ORTUNG UND DARSTELLUNG VON INSPEKTIONSDATEN**

(30) Priorität: 15.06.2015 DE 102015109543
(71) Anmelder: iPEK International GmbH, 87477 Sulzberg (DE)
(72) Erfinder: Kennerknecht, Gerhard, 87561 Oberstdorf (DE); Guggemos, Florian, 87435 Kempten (DE); Tozzo, Farbrizio, 87787 Wolfertschwenden (DE); Nagel, Thomas, 6992 Hirschegg (AT)
(74) Vertreter: 2s | ip Schramm Schneider Patentanwälte Rechtsanwälte

(57) **Zusammenfassung**

Bereit gestellt wird ein Verfahren zur Darstellung von Inspektionsdaten einer Kanalinspektion, wobei die Inspektionsdaten während einer Kanalinspektion aufgezeichnet und zusammen mit einem Geocode in einer Speichereinrichtung gespeichert wurden, wobei das Verfahren zumindest folgende Schritte umfasst:
- Laden der Inspektionsdaten von der Speichereinrichtung in einen Arbeitsspeicher einer Anzeigeeinrichtung, wobei zumindest jene Inspektionsdaten geladen werden, deren Geocode einem vorbestimmten Kriterium entspricht,
- Anzeigen von Umgebungsdaten an der Anzeigeeinrichtung, die von einer Bildaufnahmeeinrichtung der Anzeigeeinrichtung bereitgestellt werden, und
- Anzeigen der geladenen Inspektionsdaten an der Anzeigeeinrichtung, wobei die von den geladenen Inspektionsdaten umfassten Zustandsdaten den angezeigten Umgebungsdaten überlagert werden.

Bereit gestellt werden ferner eine Anzeigeeinrichtung, die angepasst ist, das erfindungsgemäße Verfahren zur Ausführung zu bringen, und ein Inspektionssystem zur Inspektion eines Kanals, welches angepasst ist, Zustandsdaten des Kanals und dazugehörige Geocodes zu erfassen und die erfassten Zustandsdaten zusammen mit den Geocodes in einer Speichereinrichtung zu speichern.

## Beschreibung

### Gebiet der Erfindung

Die Erfindung betrifft ein Verfahren zur Darstellung von Inspektionsdaten einer Kanalinspektion an einer Anzeigeeinrichtung, eine hierfür angepasste Anzeigeeinrichtung, ein Inspektionssystem zum Erfassen der Inspektionsdaten und ein System, welches ein erfindungsgemäßes Inspektionssystem und eine erfindungsgemäße Anzeigeeinrichtung umfasst.

### Hintergrund der Erfindung

Es besteht die Anforderung, Kanalsysteme in regelmäßigen Abständen oder bei Bedarf zu inspizieren und ggf. vorhandene Schäden am Kanalrohr oder Ablagerungen im Kanalrohr zu beseitigen. Hierfür ist es bekannt, zunächst eine Kanalinspektion durchzuführen, bei der der zu inspizierende Kanal mit einem Inspektionssystem befahren wird. Das Inspektionssystem weist in der Regel eine Bildaufnahmeeinrichtung auf, mit der das Innere des Kanals aufgezeichnet wird, etwa in Form einer Videodatei. Je nach Anforderung kann ein Schadensbericht mit detaillierten Informationen erzeugt werden.

Im Anschluss an die Kanalinspektion wird dann auf Grundlage des Schadensberichtes eine Klassifizierung der Schäden durchgeführt. Zudem muss, sofern Schäden vorhanden sind, eine Entscheidung getroffen werden, ob eine Sanierung bzw. Wartung des Kanals notwendig ist. Sofern eine Sanierung bzw. Wartung notwendig ist, wird ein Dienstleister beauftragt, der die Sanierung bzw. Wartung auf Grundlage des Schadensberichts durchführt. Dieser Dienstleister muss dann die Schadensstelle lokalisieren und dort die notwendigen Reparatur- bzw. Wartungsmaßnahmen durchführen.

Um die Wartung bzw. Reparatur durchführen zu können, muss dieser Dienstleister allerdings zunächst die Schadensstelle im Kanalrohr lokalisieren. Bekannt ist hierbei, dass der Dienstleister ein Wartungssystem in das Kanalrohr einführt, welches ebenfalls eine Bildaufnahmeeinrichtung aufweist. Beim Verfahren des Wartungssystems in dem Kanalrohr kann der Dienstleister die von dem Wartungssystem aufgenommenen Bilddaten mit den während des Inspektionsvorgangs aufgenommen Bilddaten vergleichen. Ist die Schadensstelle lokalisiert worden, kann mit der Wartung bzw. Reparatur begonnen werden.

Diese Art der Lokalisierung von Schäden ist allersdings sehr aufwendig und zudem fehleranfällig. Bei mehreren ähnlichen Schäden im Kanalrohr kann es vorkommen, dass ein von dem Wartungssystem aufgenommener Schaden ähnlich zu einem der mehreren von dem Inspektionssystem aufgezeichneten Schäden ist. Dabei kann es vorkommen, dass der Dienstleister den aktuell von dem Wartungssystem aufgenommenen Schaden einem falschen von dem Inspektionssystem aufgezeichneten Schaden zuordnet, mit der Folge, dass ggf. die falschen Reparatur- bzw. Wartungsmaßnahmen eingeleitet werden. Denn ähnliche bzw. gleichartige Schäden können durchaus verschiedene Wartungs- bzw. Reparaturmaßnahmen erfordern.

### Aufgabe der Erfindung

Aufgabe der vorliegenden Erfindung ist es daher, Lösungen bereitzustellen, die während eines Reparatur- bzw. Wartungsvorgangs eine verbesserte Lokalisierung von Schäden in einem Kanal und eine verbesserte Visualisierung der von einem Inspektionssystem aufgenommenen Daten ermöglichen. Zudem ist es eine Aufgabe der Erfindung, die Zuverlässigkeit von Wartungs- bzw. Reparaturmaßnahmen zu erhöhen, insbesondere zu gewährleisten, dass Schäden in dem Kanal mit den richtigen Maßnahmen beseitigt werden.

### Erfindungsgemäße Lösung

Erfindungsgemäß wird diese Aufgabe mit einem Verfahren zur Darstellung von Inspektionsdaten einer Kanalinspektion an einer Anzeigeeinrichtung, eine hierfür angepasste Anzeigeeinrichtung, ein Inspektionssystem zur Inspektion eines Kanals, und ein System, welches ein erfindungsgemäßes Inspektionssystem und eine erfindungsgemäße Anzeigeeinrichtung umfasst, gelöst.

Bereitgestellt wird demnach ein Verfahren zur Darstellung von Inspektionsdaten einer Kanalinspektion, wobei die Inspektionsdaten während einer Kanalinspektion aufgezeichnet wurden und in einer Speichereinrichtung gespeichert wurden, und die Inspektionsdaten zumindest einen Geocode und dem Geocode zugeordnete Zustandsdaten des Kanals umfassen, wobei das Verfahren zumindest folgende Schritte umfasst:
- Laden der Inspektionsdaten von der Speichereinrichtung in einen Arbeitsspeicher einer Anzeigeeinrichtung, wobei zumindest jene Inspektionsdaten geladen werden, deren Geocode einem vorbestimmten Kriterium entspricht,
- Anzeigen von Umgebungsdaten an der Anzeigeeinrichtung, wobei die Umgebungsdaten vorzugsweise von einer Bildaufnahmeeinrichtung der Anzeigeeinrichtung bereitgestellt werden, und
- Anzeigen der geladenen Inspektionsdaten an der Anzeigeeinrichtung, wobei die von den Inspektionsdaten umfassten Zustandsdaten den angezeigten Umgebungsdaten überlagert werden.

Die Anzeigeeinrichtung befindet sich hierbei außerhalb des Kanalrohrs bzw. an der Oberfläche oberhalb des Kanalrohrs (z.B. oberhalb einer Straße). Zum Anzeigen der geladenen Inspektionsdaten werden deren Geocodes mit dem Geocode der Anzeigeeinrichtung in Bezug gebracht, sodass die Inspektionsdaten relativ zu den Umgebungsdaten korrekt angezeigt werden. Die Umgebungsdaten umfassen hierbei beispielsweise eine Bild- bzw. Videoaufnahme der Straßenoberfläche, unter der der Kanal verläuft, wobei die Rückseite der Anzeigeeinrichtung etwa zur Straßenoberfläche hin ausgerichtet ist, sodass eine an der Rückseite der Anzeigeeinrichtung angeordnete Kamera ein Bild von der Straßenoberfläche aufnehmen kann, welches als Umgebungsdaten angezeigt wird. Das Bild kann auch Bewegtbilder (Video) umfassen.

Vorteilhaft ist hierbei, dass durch das Überlagern der realen Umgebungsdaten, etwa ein Bild einer Straßenoberfläche, mit den Inspektionsdaten, wobei der Geocode der Inspektionsdaten mit dem Geocode der Anzeigeeinrichtung (bzw. mit der Geocode der aufgenommenen Umgebungsdaten) korrespondiert, einerseits die Schadensstelle von der Oberfläche aus lokalisiert werden kann und andererseits die korrekten Schadensbilder aus den Inspektionsdaten zur Verfügung gestellt werden. Für den Dienstleister, der die Reparatur bzw. Wartung durchführt, ergibt sich hierbei der Vorteil, dass einerseits die Schadensstelle schneller lokalisiert werden kann und andererseits, dass für den lokalisierten Schaden auch die korrekten Reparatur- bzw. Wartungsmaßnahmen durchgeführt werden. Zudem kann der Dienstleister durch das In-Bezug-Setzen der Inspektionsdaten mit den realen Umgebungsdaten die Inspektionsdaten einfacher interpretieren und verstehen.

Das vorbestimmte Kriterium kann einen der Anzeigeeinrichtung zugeordneten Geocode umfassen, wobei der der Anzeigeeinrichtung zugeordnete Geocode von einer der Anzeigeeinrichtung zugeordneten Einrichtung zum Ermitteln von Geocodes bereitgestellt wird, wobei die Einrichtung zum Ermitteln von Geocodes angepasst ist, den Geocode anhand von GPS-Daten, von Daten eines inertialen Navigationssystems, einer Triangulation von WLAN-Funkzellen, einer Triangulation von Mobilfunkzellen, oder Kombinationen hiervon, zu bestimmen.

Dadurch ist gewährleistet, dass den an der Anzeigeeinrichtung angezeigten Umgebungsdaten die korrekten Inspektionsdaten zugeordnet werden.

In einer Ausgestaltung der Erfindung sind die Zustandsdaten des Kanals ausgewählt aus der Gruppe zumindest umfassend Videobilder des Kanals, Bildaufnahmen des Kanals, Durchmesser des Kanals, Informationen über Seitenkanäle, Schadensinformationen, Neigung des Kanals, Kanalverlauf, Temperatur, und Kombinationen hiervon.

Vorteilhaft ist es, wenn bei einer Änderung des der Anzeigeeinrichtung zugeordneten Geocodes jene Inspektionsdaten nachgeladen und an der Anzeigeeinrichtung angezeigt werden, deren Geocode dem geänderten Geocode der Anzeigeeinrichtung entspricht. Vorteilhafterweise werden diese Inspektionsdaten in Echtzeit nachgeladen und an der Anzeigeeinrichtung angezeigt.

Vorteilhaft ist hierbei, dass der Anwender sich an der Oberfläche über dem Kanal fortbewegen kann und den fortlaufend aufgenommenen realen Umgebungsdaten fortlaufend die entsprechenden Inspektionsdaten überlagert werden. Der Anwender kann so durch Fortbewegen an der Oberfläche einen "virtuellen Gang" durch den unterhalb der Oberfläche liegenden Kanal durchführen.

In einer vorteilhaften Ausgestaltung der Erfindung werden beim Laden der Inspektionsdaten von der Speichereinrichtung in den Arbeitsspeicher der Anzeigeeinrichtung zumindest jene Inspektionsdaten geladen, deren Geocodes innerhalb eines vorbestimmten Umkreises des der Anzeigeeinrichtung zugeordneten Geocodes liegen.

Vorteilhaft ist hierbei, wenn nur jene Inspektionsdaten von der Speichereinrichtung in den Arbeitsspeicher geladen werden, die sich nicht bereits im Arbeitsspeicher befinden.

Damit können Inspektionsdaten, die sich in unmittelbarer Nähe des betrachteten Kanalabschnitts befinden, aber sich außerhalb des an der Anzeigeeinrichtung angezeigten Kanalabschnitts liegen, vorgeladen werden, um bei einer Änderung des Geocodes der Anzeigeeinrichtung ein flüssiges bzw. ruckelfreies Nachführen der anzuzeigenden Inspektionsdaten zu ermöglichen.

In einer Ausgestaltung der Erfindung kann es vorgesehen sein, nur solche Inspektionsdaten einer Anzeigeeinrichtung anzuzeigen, die ein vorbestimmtes Anzeigekriterium erfüllen, wobei den Inspektionsdaten zumindest eines der vorbestimmten Anzeigekriterien zugeordnet ist.

Dadurch wird es dem Anwender ermöglicht, bestimmte in den Inspektionsdaten enthaltenen Informationen an der Anzeigeeinrichtung gezielt ein- bzw. auszublenden. Beispielsweise kann nur der Verlauf des Kanals eingeblendet werden. Alternativ kann auch eine Detailansicht des Schadens etwa in Form eines Bildes eingeblendet bzw. den Umgebungsdaten überlagert werden.

In einer vorteilhaften Ausgestaltung der Erfindung kann die Anzeigeeinrichtung angepasst sein, Benutzereingaben entgegenzunehmen, wobei die entgegengenommenen Benutzereingaben in der Speichereinrichtung gespeichert und einem Geocode, vorzugsweise dem aktuellen der Anzeigeeinrichtung zugeordneten Geocode, zugeordnet werden.

Damit können beispielsweise die in der Speichereinrichtung gespeicherten Inspektionsdaten während eines Wartungs- und/oder Reparaturvorgangs mit weiteren lokationsabhängigen Daten angereichert werden. Beispielsweise kann so die Durchführung der Wartung bzw. Reparatur dokumentiert werden.

In einer vorteilhaften Ausgestaltung des erfindungsgemäßen Verfahrens ist es vorgesehen, dass die Anzeigeeinrichtung Positionsdaten einer sich im Kanal befindlichen Inspektions- und/oder Wartungseinrichtung entgegennimmt, vorzugsweise über eine drahtlose Kommunikationsverbindung, und die aktuelle Position der Inspektions- und/oder Wartungseinrichtung in dem Kanal an der Anzeigeeinrichtung visualisiert. Damit kann die aktuelle Position der Inspektions- und/oder Wartungseinrichtung während eines Wartungsvorgangs an der Anzeigeeinrichtung relativ zu den dort angezeigten realen Umgebungsdaten bzw. zu den dort angezeigten Inspektionsdaten angezeigt werden. Der Benutzer kann so schnell feststellen, wo sich die Inspektions- und/oder Wartungseinrichtung aktuell befindet.

Die drahtlose Kommunikationsverbindung kann beispielsweise eine WLAN-Verbindung oder eine sonstige drahtlose Funkverbindung sein. Alternativ kann auch eine drahtgebundene Übertragung der Positionsdaten vorgesehen sein.

In einer noch weiteren Ausgestaltung des erfindungsgemäßen Verfahrens, ist es vorgesehen, wenn die zu ladenden Inspektionsdaten zusätzlich zum Geocode der Anzeigeeinrichtung auch in Abhängigkeit von einem Neigungswinkel der Anzeigeeinrichtung geladen werden. Damit kann in vorteilhafter Weise eine "vorausschauende" Visualisierung von Inspektionsdaten relativ zu den Umgebungsdaten realisiert werden.

Bereitgestellt wird des Weiteren eine Anzeigeeinrichtung, insbesondere tragbare Anzeigeeinrichtung, mit einem Arbeitsspeicher und mit einer Bildaufnahmeeinrichtung, wobei die Anzeigeeinrichtung mit einer Speichereinrichtung, in der Inspektionsdaten einer Kanalinspektion gespeichert sind, wobei die Inspektionsdaten zumindest einen Geocode und dem Geocode zugeordnete Zustandsdaten des Kanals umfassen, koppelbar ist, und wobei die Anzeigeeinrichtung angepasst ist
- zumindest jene Inspektionsdaten von der Speichereinrichtung in den Arbeitsspeicher der Anzeigeeinrichtung zu laden, deren Geocode einem vorbestimmten Kriterium entspricht,
- Umgebungsdaten einer Anzeigeeinrichtung anzuzeigen, wobei die Umgebungsdaten von der Bildaufnahmeeinrichtung bereitgestellt werden, und
- die geladenen Inspektionsdaten an der Anzeigeeinrichtung anzuzeigen, wobei die von den Inspektionsdaten umfassten Zustandsdaten den angezeigten Umgebungsdaten überlagert werden.

Die Speichereinrichtung kann Bestandteil der Anzeigeeinrichtung sein. In einer alternativen Ausgestaltung kann die Speichereinrichtung über ein Kommunikationsnetzwerk (z.B. Internet) mit der Anzeigeeinrichtung koppelbar bzw. gekoppelt sein.

Vorteilhaft ist es, wenn die Anzeigeeinrichtung eine Einrichtung zum Ermitteln von Geocodes aufweist, wobei die Einrichtung zum Ermitteln von Geocodes angepasst ist, den Geocode anhand von GPS-Daten, von Daten einer inertialen Navigationssystems, einer Triangulation von WLAN-Funkzellen, einer Triangulation von Mobilfunkzellen, oder Kombinationen hiervon zu bestimmen, wobei das vorbestimmte Kriterium den von der Einrichtung zum Ermitteln von Geocodes ermittelten Geocode umfasst.

In einer weiteren vorteilhaften Ausgestaltung der Erfindung kann die Anzeigeeinrichtung einen Lagesensor bzw. Neigungssensor (oder eine sonstige zum Ermitteln einer Neigung der Anzeigeeinrichtung geeignete Einrichtung) aufweisen, mit dem ein Neigungswinkel der Anzeigeeinrichtung ermittelt werden kann, wobei der Neigewinkel der Anzeigeeinrichtung zusätzlich zum Geocode als Kriterium beim Laden der Inspektionsdaten herangezogen werden kann.

Die Anzeigeeinrichtung kann weiter angepasst sein, beim Laden der Inspektionsdaten von der Speichereinrichtung in den Arbeitsspeicher der Anzeigeeinrichtung nur jene Inspektionsdaten zu laden, deren Geocodes innerhalb eines vorbestimmten Umkreises des von der Einrichtung zum Ermitteln von Geocodes ermittelten Geocode liegen, wobei vorzugsweise nur jene Inspektionsdaten von der Speichereinrichtung in den Arbeitsspeicher geladen werden, die sich nicht bereits im Arbeitsspeicher befinden.

Bereitgestellt wird des Weiteren ein Inspektionssystem zur Inspektion eines Kanals, wobei das Inspektionssystem angepasst ist, Zustandsdaten des Kanals und dazugehörige Geocodes zu erfassen und die erfassten Zustandsdaten zusammen mit den Geocodes in einer Speichereinrichtung zu speichern, wobei die Zustandsdaten des Kanals ausgewählt sind aus der Gruppe zumindest umfassend Videobilder des Kanals, Bildaufnahmen des Kanals, Durchmesser des Kanals, Informationen über Seitenkanäle, Schadensinformationen, Neigung des Kanals, Kanalverlauf, und Kombinationen hiervon.

Das Inspektionssystem kann eine Speichereinrichtung aufweisen, in der die erfassten Zustandsdaten temporär zwischengespeichert werden. Die temporär zwischengespeicherten Zustandsdaten können nach Abschluss der Inspektion in eine Speichereinrichtung übertragen werden, auf die die erfindungsgemäße Anzeigeeinrichtung Zugriff hat.

Bereitgestellt wird ferner ein System mit einem erfindungsgemäßen Inspektionssystem und einer erfindungsgemäßen Anzeigeeinrichtung.

### Kurzbeschreibung der Figuren

Weitere Einzelheiten und Merkmale der Erfindung sowie konkrete Ausführungsbeispiele der Erfindung ergeben sich aus der nachfolgenden Beschreibung in Verbindung mit der Zeichnung. Es zeigt:
- Fig. 1: eine erfindungsgemäße Anzeigeeinrichtung zur Verdeutlichung des erfindungsgemäßen Verfahrens;
- Fig. 2: eine erfindungsgemäße Anzeigeeinrichtung mit einer Detailansicht von Inspektionsdaten gemäß dem erfindungsgemäßen Verfahren;
- Fig. 3: ein erfindungsgemäßes System mit einem erfindungsgemäßen Inspektionssystem und einer erfindungsgemäßen Anzeigeeinrichtung;
- Fig. 4: ein Anwendungsbeispiel eines erfindungsgemäßen Verfahrens unter Einbezug eines erfindungsgemäßen Inspektionssystems;
- Fig. 5: eine Gegenüberstellung einer im Wesentlichen horizontal ausgerichteten Anzeigeeinrichtung und einer geneigten Anzeigeeinrichtung; und
- Fig. 6: ein Ablaufdiagramm eines erfindungsgemäßen Verfahrens.

### Detaillierte Beschreibung der Erfindung

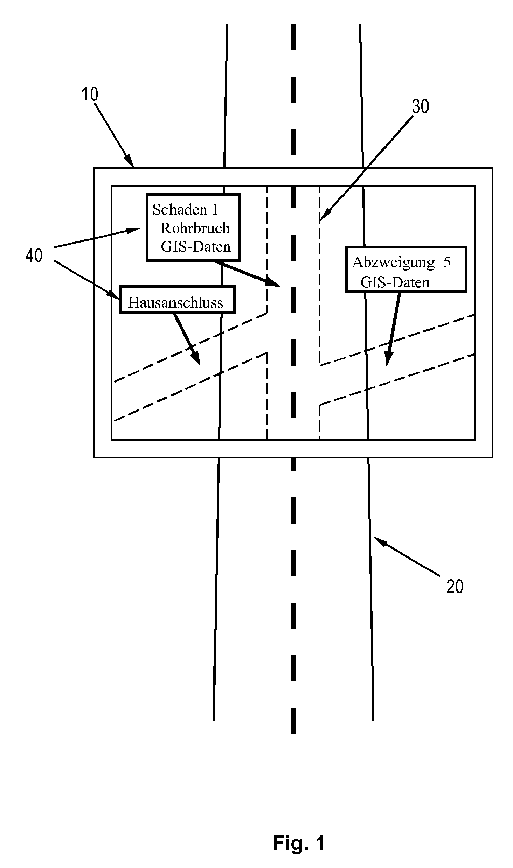

**Fig. 1** zeigt eine erfindungsgemäße Anzeigeeinrichtung 10 zur Verdeutlichung des Grundprinzips des erfindungsgemäßen Verfahrens.

Ein Anwender, beispielsweise ein Dienstleister, der Wartungs- und Reparaturarbeiten in einem Kanal durchführt, begibt sich mit der Anzeigeeinrichtung 10 an die Stelle oberhalb des Kanals, wo er den Kanal zur Vorbereitung der Wartungsarbeiten begutachten möchte. In dem in Fig. 1 gezeigten Beispiel befindet sich der Kanal unterhalb einer Straße 20. Als Anzeigeeinrichtung 10 ist hier ein Tablet-Computer vorgesehen, der eine Bildaufnahmeeinrichtung aufweist. Ferner weist die Anzeigeeinrichtung 10 eine Einrichtung zum Ermitteln des aktuellen Geocodes der Anzeigeeinrichtung 10 auf. Die Einrichtung zum Ermitteln des aktuellen Geocodes kann beispielsweise ein GPS-Modul sein.

Nachdem sich der Anwender an die gewünschte Stelle begeben hat, startet er an der Anzeigeeinrichtung ein Anwendungsprogramm, mit dem er die Begutachtung des Kanals durchführt. Die Bildaufnahmeeinrichtung der Anzeigeeinrichtung 10 wird hierbei zur Oberfläche der Straße 20 hin ausgerichtet, sodass die mit der Bildaufnahmeeinrichtung aufgenommene Oberfläche an der Anzeigeeinrichtung 10 zur Anzeige gebracht wird.

Der Anwender kann nun Inspektionsdaten mit Hilfe des Anwendungsprogramms laden und an der Anzeigeeinrichtung 10 zur Anzeige bringen. Die Inspektionsdaten sind vor dem Reparatur- bzw. Wartungsvorgang im Rahmen einer Inspektion aufgezeichnet und in einer Speichereinrichtung gespeichert worden. Die gespeicherten Inspektionsdaten wurden hierbei jeweils einem Geocode, etwa GPS-Koordinaten, zugeordnet. Beim Laden der Inspektionsdaten werden jene Inspektionsdaten aus der Speichereinrichtung, etwa in den Arbeitsspeicher der Anzeigeeinrichtung 10 geladen, denen in der Speichereinrichtung ein Geocode zugeordnet ist, der jenem Geocode entspricht, welcher von dem GPS-Modul der Anzeigeeinrichtung 10 aktuell ermittelt wird. Das heißt, es werden nur solche Inspektionsdaten geladen, die der unmittelbaren Umgebung der Anzeigeeinrichtung 10 zugeordnet sind. Beispielsweise können jene Inspektionsdaten geladen werden, deren GPS-Koordinaten in einem vorbestimmten Umkreis der GPS-Koordinaten der Anzeigeeinrichtung 10 liegen.

Die so geladenen Inspektionsdaten werden dann von dem Anwendungsprogramm aufbereitet und an der Anzeigeeinrichtung 10 zur Anzeige gebracht, wobei die Inspektionsdaten als Zusatzinformationen 40 und/oder als Kanalverlauf 30 den an der Anzeigeeinrichtung 10 angezeigten realen Umgebungsdaten überlagert werden.

In dem in Fig. 1 gezeigten Beispiel wird an der Anzeigeeinrichtung 10 ein "virtueller" Kanal 30, der sich an dieser Stelle unterhalb der Oberfläche befindet, eingeblendet, wobei dieser Kanal 30 zwei Abzweigungen aufweist. Mit Hilfe der eingeblendeten Zusatzinformationen 40 wird der Anwender darauf hingewiesen, dass es sich bei der rechten Abzweigung um eine normale Abzweigung handelt, während es sich bei der linken Abzweigung um einen Hausanschluss handelt. Ferner wird dem Anwender mit Hilfe der eingeblendeten Zusatzinformationen 40 die Position eines Schadens am Kanalrohr 30 angezeigt, wobei der Anwender zusätzlich die Information erhält, dass es sich hierbei um einen Rohrbruch handelt. Mit den ZusatzInformationen können auch weitere GIS-Daten (Daten eines Geoinformationssystems) eingeblendet werden. Zusätzlich können auch die aktuellen Geokoordinaten bzw. GPS-Koordinaten zur Anzeige gebracht werden.

Der Benutzer erhält so an der Anzeigeeinrichtung 10 ein Bild von der realen Umgebung, in der der unterhalb der Oberfläche verlaufende Kanal samt zusätzlicher Informationen eingeblendet wird. Der Benutzer kann so die Stelle eines Schadens im Kanal leichter orten und sich unter Berücksichtigung der realen Umgebung ein besseres Bild von dem Schaden verschaffen. Beispielsweise kann der Anwender aufgrund der realen Umgebungsdaten und der Position der in diesen Umgebungsdaten eingeblendeten Schadensstelle schneller und zuverlässiger entscheiden, wo sich ein geeigneter Schacht für den Zugang zum Kanal befindet.

Die Inspektionsdaten können zudem Informationen darüber umfassen, welche Reparatur- bzw. Wartungsmaßnahmen für die an der Anzeigeeinrichtung eingeblendete Schadensstelle vorgesehen sind. Zudem können die Inspektionsdaten beispielsweise Bildaufnahmen des Kanalinneren umfassen, die bei Bedarf zusätzlich an der Anzeigeeinrichtung 10 eingeblendet werden können. In einer weiteren Ausgestaltung der Erfindung ist es vorgesehen, dass die Inspektionsdaten auch Videobilder bzw. Videoaufnahmen umfassen, die ggf. ebenfalls an der Anzeigeeinrichtung 10 zur Anzeige gebracht werden können. Die Videodaten bzw. Videoaufnahmen sind insbesondere dann vorteilhaft, wenn sich der Anwender der Anzeigeeinrichtung an der Oberfläche entlang des unterhalb der Oberfläche verlaufenden Kanals 30 fortbewegt. Damit wird dem Anwender ein "virtueller Rundgang" durch den Kanal ermöglicht.

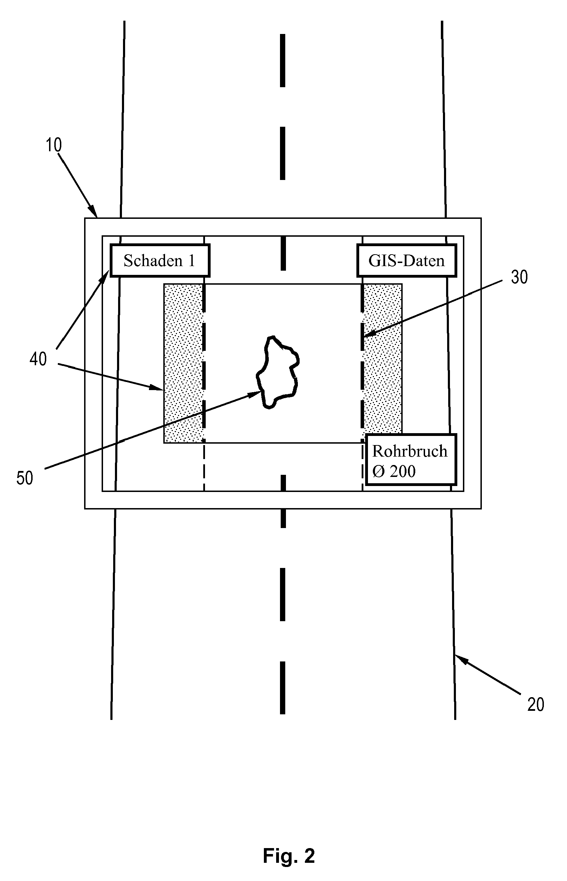

**Fig. 2** zeigt eine erfindungsgemäße Anzeigeeinrichtung 10, wobei hier detaillierte Informationen zu dem in Fig. 1 an der Anzeigeeinrichtung 10 eingeblendeten Schaden angezeigt werden. Zu dem Schaden 50 in dem Kanal 30 ist hier eine Bildaufnahme eingeblendet, wobei zusätzlich Informationen über den Schaden (Rohrbruch) und den Durchmesser des Kanals eingeblendet werden. Mit Hilfe dieser Detailinformationen kann der Anwender beispielsweise eine Entscheidung darüber treffen, welche Reparatureinrichtungen zur Behebung des Schadens, ggf. gemäß vorgegebener Reparaturanweisungen, verwendet werden können. Der Anwender kann so bereits vor Beginn der Reparaturmaßnahmen entscheiden, mit welchen Werkzeugen beispielsweise ein Reparaturfahrzeug ausgestattet werden muss.

Durch die Darstellung der realen Umgebung an der Anzeigeeinrichtung 10 und durch das Überlagern der realen Umgebungsdaten mit den Inspektionsdaten bzw. mit den Zustandsdaten werden die realen Daten und die Zustandsdaten so intelligent miteinander verknüpft, dass sie für den Anwender einerseits sehr einfach zu interpretieren und zu verstehen sind und dass der Anwender andererseits aus dieser kombinierten Darstellung zusätzliche Informationen gewinnen kann, die aus den Inspektionsdaten alleine nicht gewonnen werden könnten. Dadurch wird eine zuverlässigere und effizientere Wartung von Kanal- bzw. Rohrsystemen ermöglicht.

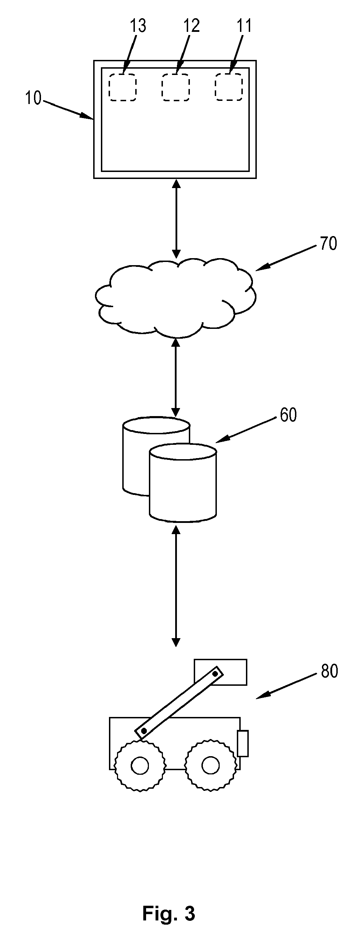

**Fig. 3** zeigt ein erfindungsgemäßes System mit einer erfindungsgemäßen Anzeigeeinrichtung 10 und einem erfindungsgemäßen Inspektionssystem 80.

Im Rahmen einer Kanalinspektion werden mit der Inspektionseinrichtung 80 Inspektionsdaten aufgezeichnet und zusammen mit den zugehörigen Geodaten (beispielsweise GPS-Koordinaten) in einer Speichereinrichtung 60 gespeichert. Die Inspektionsdaten können beispielsweise Videobilder oder Standbilder des Kanals umfassen, die mit einer Bildaufnahmeeinrichtung des Inspektionssystems 80 aufgenommen werden. Zudem können die Inspektionsdaten beispielsweise den Durchmesser des Kanals, Informationen über Seitenkanäle, die Neigung des Kanals und den Kanalverlauf umfassen, die mit entsprechenden Sensoren des Inspektionssystems 80 aufgezeichnet werden und ebenfalls den GPS-Koordinaten zugeordnet und in der Speichereinrichtung 60 gespeichert werden. Zusätzlich können die Inspektionsdaten Schadensinformationen umfassen, die beispielsweise während der Inspektion oder nach der Inspektion vom Bedienpersonal in der Speichereinrichtung 60 abgelegt und den entsprechenden GPS-Koordinaten zugeordnet werden können.

Die von der Inspektionseinrichtung 80 aufgezeichneten Inspektionsdaten können während der Inspektion in einer Speichereinrichtung des Inspektionssystems 80 zwischengespeichert werden und nach Abschluss der Inspektion an die Speichereinrichtung 60 übermittelt werden.

Das Inspektionssystem 80 kann beispielsweise ein Fahrwagen mit einer daran angeordneten Bildaufnahmeeinrichtung und mit daran angeordneten Sensoren zum Aufzeichnen der Inspektionsdaten sein. Vorteilhafterweise weist das Inspektionssystem 80 ein Modul zum Ermitteln der aktuellen Position im Kanal auf. Dieses Modul kann beispielsweise ein GPS-Modul oder ein inertiales Navigationssystem sein. Mit Hilfe des inertialen Navigationssystems kann die Position des Inspektionssystems innerhalb des Kanals auch dann ausreichend genau erfasst werden, wenn eine GPS-gestützte Positionsbestimmung nicht möglich ist. Anstelle eines Fahrwagens kann auch ein sogenanntes Schiebesystem als Inspektionssystem 80 vorgesehen sein.

Bei der in Fig. 3 gezeigten Ausgestaltung eines erfindungsgemäßen Systems ist die Speichereinrichtung 60 über ein Kommunikationsnetzwerk 70 (beispielsweise das Internet oder ein Mobilfunknetzwerk) mit der Anzeigeeinrichtung 10 koppelbar bzw. gekoppelt. In einer alternativen Ausgestaltung kann die Speichereinrichtung 60 auch Bestandteil der Anzeigeeinrichtung 10 sein.

Die Anzeigeeinrichtung 10 kann beispielsweise eine mobile Anzeigeeinrichtung, etwa ein Tablet-Computer, sein. Die Anzeigeeinrichtung 10 weist eine Einrichtung 11 zum Ermitteln eines Geocodes (etwa ein GPS-Modul) auf. Damit kann die aktuelle Position der Anzeigeeinrichtung 10 ermittelt werden, die benötigt wird, um die entsprechenden Inspektionsdaten aus der Speichereinrichtung 60 zu laden.

Des Weiteren weist die Anzeigeeinrichtung 10 eine Bildaufnahmeeinrichtung, etwa eine Kamera, auf, mit der die reale Umgebung aufgezeichnet und an der Anzeigeeinrichtung 10 zur Anzeige gebracht werden kann.

Des Weiteren weist die Anzeigeeinrichtung 10 einen Arbeitsspeicher 13 auf, in dem die an der Anzeigeeinrichtung 10 anzuzeigenden Inspektionsdaten von der Speichereinrichtung 60 geladen werden. Der Arbeitsspeicher 13 ist zudem dazu vorgesehen, Inspektionsdaten, die der unmittelbaren Umgebung der Anzeigeeinrichtung 10 zugeordnet sind, aber in dem an der Anzeigeeinrichtung 10 dargestellten Ausschnitt der realen Umgebung nicht zur Anzeige kommen. Der Arbeitsspeicher 13 wird also dazu genutzt, um unmittelbar benachbarte Inspektionsdaten vorzuladen, um bei einer Änderung der Lokation der Anzeigeeinrichtung 10 ein flüssiges und ruckelfreies Aktualisieren der anzuzeigenden Inspektionsdaten zu ermöglichen.

In einer Ausgestaltung der Erfindung kann die Anzeigeeinrichtung 10 auch angepasst sein, schreibend auf die Speichereinrichtung 60 zuzugreifend. Dadurch wird es möglich, dass ein Bedienpersonal während eines Wartungsvorgangs zusätzliche positionsabhängige Inspektionsdaten in der Speichereinrichtung 60 speichern kann. Damit kann beispielsweise ein Wartungsprotokoll in der Speichereinrichtung 60 hinterlegt werden. Zudem kann auch ein Datum bzw. eine Uhrzeit und eine Dauer der Wartungsarbeiten in der Speichereinrichtung 60 gespeichert werden, sodass ein gesamter Wartungsvorgang lückenlos dokumentiert und nachvollzogen werden kann.

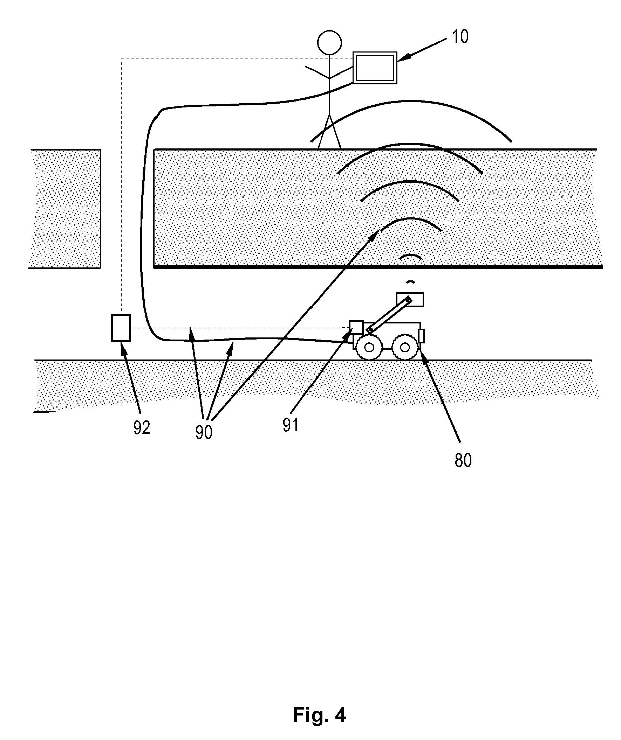

**Fig. 4** zeigt ein erfindungsgemäßes System zur Darstellung von Inspektionsdaten einer Kanalinspektion mit einem Wartungssystem 80 und einer erfindungsgemäßen Anzeigeeinrichtung 10.

Die Wartungseinrichtung 80 ist hier als Inspektionswagen ausgebildet, an dem Wartungsmittel, beispielsweise Greifer oder Fräsen angeordnet sind. Ferner ist an der Wartungseinrichtung 80 eine Bildaufnahmeeinrichtung angeordnet. In der in Fig. 4 gezeigten Ausgestaltung ist die Wartungseinrichtung 80 mit der Anzeigeeinrichtung 10, die außerhalb des Kanals angeordnet ist, gekoppelt.

In einer Ausgestaltung der Erfindung kann die Wartungseinrichtung 80 über eine drahtgebundene Kommunikationsverbindung mit der erfindungsgemäßen Anzeigeeinrichtung 10 gekoppelt sein. In einer alternativen Ausgestaltung kann das Wartungssystem 80 über eine drahtlose Kommunikationsverbindung mit der Anzeigeeinrichtung 10 gekoppelt sein. Die drahtlose Kommunikationsverbindung kann beispielsweise als WLAN-Verbindung ausgestaltet sein, wobei das Wartungssystem 80 einen WLAN-Sender 91 aufweist, der über einen WLAN-Repeater 92 die WLAN-Verbindung zu der Anzeigeeinrichtung 10 einrichtet. Der WLAN-Repeater 92 kann in den Schacht hinabgelassen werden und dort verbleiben, bis die Wartung abgeschlossen ist.

Über die drahtgebundene und/oder drahtlose Kommunikationsverbindung 90 zwischen dem Wartungssystem 80 und der Anzeigeeinrichtung 10 kann das Wartungssystem 80 während den Wartungsarbeiten seine aktuelle Position im Kanal der Anzeigeeinrichtung 10 mitteilen. In einer Ausgestaltung der Erfindung kann die aktuelle Position des Wartungssystems 80 in Form von GPS-Koordinaten mitgeteilt werden. Die GPS-Koordinaten des Wartungssystems 80 können beispielsweise mit Hilfe eines GPS-Moduls des Wartungssystems 80 ermittelt werden. Alternativ kann das Wartungssystem 80 auch ein inertiales Navigationssystem aufweisen, welches für die Positionsbestimmung herangezogen werden kann, sofern ein GPS-Signal nicht empfangbar ist.

Der Anwender kann sich nun an der Anzeigeeinrichtung 10 die aktuelle Position des Wartungssystems 80 im Kanal anzeigen lassen. Sofern die aktuelle Position des Wartungssystems 80 an der Anzeigeeinrichtung fortlaufend aktualisiert wird, wird dem Anwender so die Möglichkeit zur Verfügung gestellt, das Wartungssystem 80 so lange im Kanal zu bewegen, bis beispielsweise die zu reparierende bzw. zu wartende Schadensstelle im Kanal erreicht ist. In einer Ausgestaltung der Erfindung kann die aktuelle Position des Wartungssystems 80 in dem Kanal in den angezeigten Umgebungsdaten überlagert werden, insbesondere zusammen mit den Inspektionsdaten angezeigt werden.

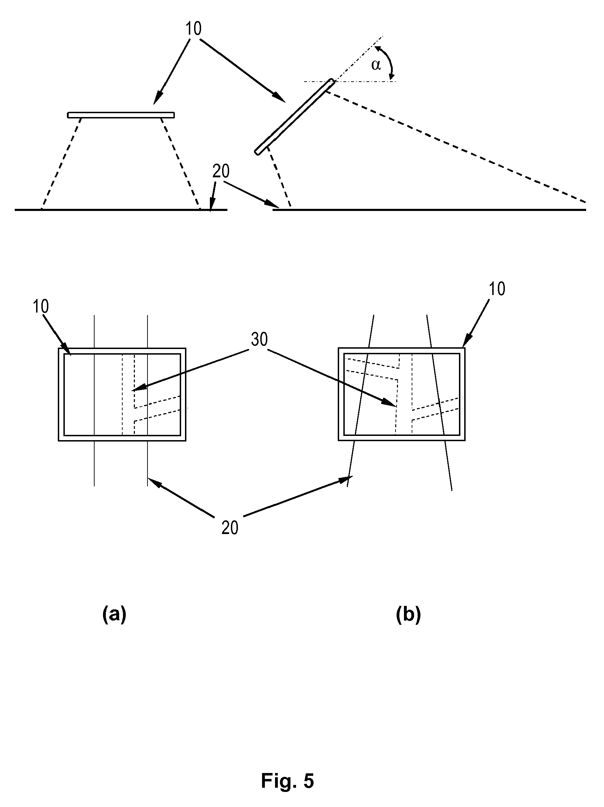

**Fig. 5** zeigt eine weitere vorteilhafte Ausgestaltung eines erfindungsgemäßen Verfahrens bzw. einer erfindungsgemäßen Anzeigeeinrichtung 10.

In Abbildung (a) ist eine erfindungsgemäße Anzeigeeinrichtung gezeigt, die im Wesentlichen horizontal und parallel zur Straßenoberfläche 20 ausgerichtet ist. Der unterhalb der Straßenoberfläche verlaufende Kanal 30 wird an der Anzeigeeinrichtung 10 zur Anzeige gebracht, wobei der Verlauf des Kanals 30 mit den realen Umgebungsdaten in Bezug gesetzt wird.

Die an der Anzeigeeinrichtung anzuzeigenden Inspektionsdaten werden anhand der aktuellen Position der Anzeigeeinrichtung aus der Speichereinrichtung geladen und an der Anzeigeeinrichtung 10 zur Anzeige gebracht.

In Abbildung (b) ist ebenfalls eine erfindungsgemäße Anzeigeeinrichtung 10 gezeigt, die allerdings nicht horizontal bzw. parallel zur Straßenoberfläche ausgerichtet ist, sondern um einen bestimmten Neigungswinkel α relativ zur Straßenoberfläche 20 geneigt ist, sodass an der Anzeigeeinrichtung 10 ein größerer Ausschnitt der realen Umgebung zur Anzeige gebracht wird. Um für diesen größeren Ausschnitt der realen Umgebung die entsprechenden Inspektionsdaten aus der Speichereinrichtung zu laden, wird beim Laden der Inspektionsdaten aus der Speichereinrichtung nicht nur der Geocode der Anzeigeeinrichtung 10, sondern auch die Neigung α der Anzeigeeinrichtung 10 relativ zur Straßenoberfläche 20 berücksichtigt. Anhand der Neigung α kann der an der Anzeigeeinrichtung 10 angezeigte Ausschnitt der realen Umgebung annäherungsweise bestimmt werden, sodass aus der Speichereinrichtung sämtliche Inspektionsdaten geladen werden können, deren Geocode innerhalb des an der Anzeigeeinrichtung 10 angezeigten Ausschnitts der realen Umgebung liegt. Damit eine "vorausschauende" Darstellung der Inspektionsdaten an der Anzeigeeinrichtung 10 ermöglicht.

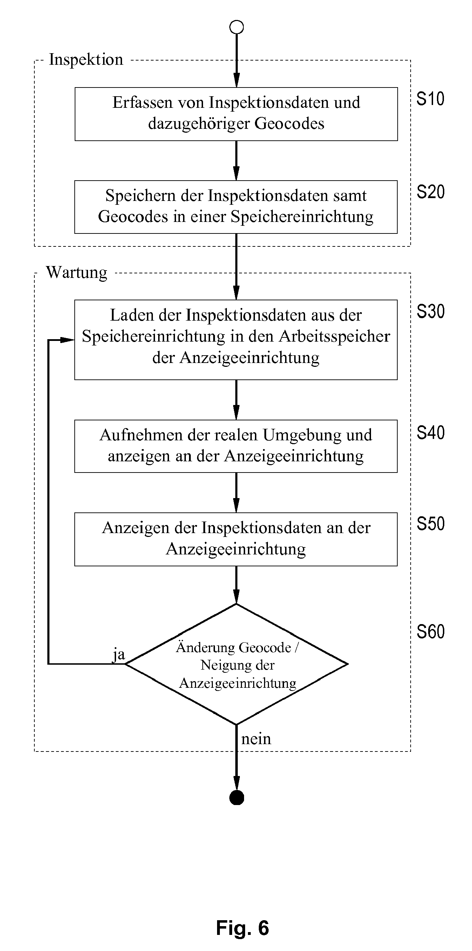

**Fig. 6** zeigt ein Ablaufdiagramm eines erfindungsgemäßen Verfahrens zur zusammenfassenden Verdeutlichung des Verfahrens.

Das in Fig. 6 gezeigte Verfahren gliedert sich im Wesentlichen in zwei Abschnitte auf, nämlich der Inspektion und der anschließenden Wartung.

Während einer Inspektion werden in einem Schritt S10 mit Hilfe einer Inspektionseinrichtung bzw. eines Inspektionssystems Inspektionsdaten und dazugehörige Geocodes erfasst und in einem Schritt S20 in einer Speichereinrichtung gespeichert. Die erfassten Inspektionsdaten können beispielsweise Videoaufnahmen, Bildaufnahmen, Durchmesser des Kanals, Neigung des Kanals, Kanalverlauf, Temperatur oder dergleichen umfassen. Bei einer Videoaufnahme des Kanals ist es so beispielsweise möglich, die entsprechenden einem Geocode zugeordneten Bilddaten des Videos abzurufen und an der erfindungsgemäßen Anzeigeeinrichtung zur Anzeige zu bringen.

Die so erfassten und in der Speichereinrichtung gespeicherten Inspektionsdaten können für eine später durchzuführende Wartung zur Verfügung gestellt werden.

Während einer Wartung ist es erfindungsgemäß vorgesehen, die für einen Wartungsvorgang relevanten Inspektionsdaten aus der Speichereinrichtung in den Arbeitsspeicher der erfindungsgemäßen Anzeigeeinrichtung zu laden. Vorteilhaft ist es hierbei, wenn nur jene Inspektionsdaten geladen werden, deren Geocode dem aktuellen Geocode der Anzeigeeinrichtung entspricht.

In einem Schritt S40 wird die reale Umgebung mit Hilfe der Bildaufnahmeeinrichtung der Anzeigeeinrichtung aufgenommen und an der Anzeigeeinrichtung zur Anzeige gebracht. Die realen Umgebungsdaten können im Wesentlichen so aufgenommen werden, wie in Fig. 5 (a) gezeigt. Alternativ können die realen Umgebungsdaten auch mit einer geneigten Anzeigeeinrichtung bzw. wie in Fig. 5 (b) gezeigt, aufgenommen werden. Wie vorstehend mit Bezug auf Fig. 5 erläutert, ändert sich durch die Neigung α der Anzeigeeinrichtung relativ zur Oberfläche der Straße der an der Anzeigeeinrichtung 10 zur Anzeige gebrachte Bildausschnitt, sodass die aus der Speichereinrichtung zu ladenden Inspektionsdaten entsprechend selektiert werden müssen.

Die geladenen Inspektionsdaten werden in dem Schritt S50 an der Anzeigeeinrichtung zur Anzeige gebracht, wobei die Inspektionsdaten den realen Umgebungsdaten überlagert werden, wie mit Bezug auf Fig. 1 bzw. Fig. 2 gezeigt. Je nach Anforderung können bestimmte Inspektionsdaten ein- bzw. ausgeblendet werden.

In dem Schritt S60 wird nun geprüft, ob sich der Geocode und/oder die Neigung der Anzeigeeinrichtung geändert haben. Hat sich der Geocode bzw. die Neigung der Anzeigeeinrichtung geändert, werden die an der Anzeigeeinrichtung angezeigten Inspektionsdaten aktualisiert. Sofern die anzuzeigenden Inspektionsdaten noch nicht in den Arbeitsspeicher der Anzeigeeinrichtung geladen wurden, werden diese aus der Speichereinrichtung nachgeladen. Vorteilhaft ist hierbei, dass beim Laden der Inspektionsdaten aus der Speichereinrichtung sämtliche Inspektionsdaten geladen werden, deren Geocodes innerhalb eines vorbestimmten Umkreises des Geocodes der Anzeigeeinrichtung liegen. Damit wird ein verzögerungsfreies Aktualisieren der angezeigten Inspektionsdaten ermöglicht.

Der Benutzer kann sich nun an der Oberfläche entlang des zu wartenden Kanals fortbewegen und gleichzeitig den darunterliegenden Kanal an der Anzeigeeinrichtung betrachten. Dem Anwender wird damit eine Art "Röntgenansicht" des Kanals an der Anzeigeeinrichtung zur Verfügung gestellt, wobei der Kanal bzw. die zugehörigen Inspektionsdaten den aufgenommenen realen Umgebung überlagert werden.

Damit wird eine bessere und einfachere Ortung von Schäden möglich. Durch das In-Bezug-Setzen der angezeigten Inspektionsdaten mit der realen Umgebung wird einerseits eine bessere Klassifizierung der Schäden ermöglicht. Andererseits kann das Wartungspersonal besser entscheiden, welcher Schacht für den Zugang zum Kanal am geeignetsten erscheint. Insgesamt werden Reparatur- und Wartungsmaßnahmen effizienter durchführbar.

### Bezugszeichenliste:

- 10: Anzeigeeinrichtung (z.B. Tablet-Computer)
- 11: Einrichtung zum Ermitteln eines Geocodes (z.B. GPS-Modul)
- 12: Bildaufnahmeeinrichtung
- 13: Arbeitsspeicher
- 20: reale Umgebung / Umwelt (z.B. Straße)
- 30: Kanal (z.B. unterhalb der Straße)
- 40: an der Anzeigeeinrichtung eingeblendete Zusatzinformation
- 50: Schaden im Kanal
- 60: Speichereinrichtung
- 70: Kommunikationsnetzwerk (z.B. Internet oder Mobilfunknetzwerk)
- 80: Inspektions- und/oder Wartungssystem
- 90: Kommunikationsverbindung (drahtlose oder drahtgebunden)
- 91: WLAN-Sender
- 92: WLAN-Repeater
- α: Neigungswinkel der Anzeigeeinrichtung 10
- S10 - S60: Schritte des Verfahrens

## Patentansprüche

1. Verfahren zur Darstellung von Inspektionsdaten einer Kanalinspektion, wobei die Inspektionsdaten während einer Kanalinspektion aufgezeichnet (S10) und in einer Speichereinrichtung (60) gespeichert (S20) wurden, und die Inspektionsdaten zumindest einen Geocode und dem Geocode zugeordnete Zustandsdaten des Kanals umfassen, wobei
- die Inspektionsdaten von der Speichereinrichtung (60) in einen Arbeitsspeicher (13) einer Anzeigeeinrichtung (10) geladen werden (S30), wobei zumindest jene Inspektionsdaten geladen werden, deren Geocode einem vorbestimmten Kriterium entsprechen,
- Umgebungsdaten an der Anzeigeeinrichtung (10) angezeigt werden (S40), wobei die Umgebungsdaten von einer Bildaufnahmeeinrichtung (12) der Anzeigeeinrichtung (10) bereitgestellt werden, und
- die geladenen Inspektionsdaten an der Anzeigeeinrichtung (10) angezeigt werden (S50), wobei die von den geladenen Inspektionsdaten umfassten Zustandsdaten den angezeigten Umgebungsdaten überlagert werden.

2. Verfahren nach Anspruch 1, wobei das vorbestimmte Kriterium einen der Anzeigeeinrichtung (10) zugeordneten Geocode umfasst, wobei der der Anzeigeeinrichtung (10) zugeordnete Geocode von einer der Anzeigeeinrichtung zugeordneten Einrichtung (11) zum Ermitteln von Geocodes bereitgestellt wird, wobei die Einrichtung zum Ermitteln von Geocodes angepasst ist, den Geocode anhand von GPS-Daten, von Daten eines inertialen Navigationssystems, einer Triangulation von WLAN-Funkzellen, einer Triangulation von Mobilfunkzellen, oder Kombinationen hiervon zu bestimmen.

3. Verfahren nach einem der vorhergehenden Ansprüche, wobei das vorbestimmte Kriterium einen Neigungswinkel (α) der Anzeigeeinrichtung (10) umfasst.

4. Verfahren nach einem der vorhergehenden Ansprüche, wobei die Zustandsdaten des Kanals ausgewählt sind aus der Gruppe zumindest umfassend Videobilder des Kanals, Bildaufnahmen des Kanals, Durchmesser des Kanals, Informationen über Seitenkanäle, Schadensinformationen, Neigung des Kanals, Kanalverlauf, Temperatur, und Kombinationen hiervon.

5. Verfahren nach einem der Ansprüche 2 bis 4, wobei bei einer Änderung des der Anzeigeeinrichtung (10) zugeordneten Geocodes jene Inspektionsdaten nachgeladen und an der Anzeigeeinrichtung (10) angezeigt werden, deren Geocode dem geänderten Geocode der Anzeigeeinrichtung entspricht.

6. Verfahren nach einem der vorhergehenden Ansprüche, wobei beim Laden der Inspektionsdaten von der Speichereinrichtung (60) in den Arbeitsspeicher (13) der Anzeigeeinrichtung (10) zumindest jene Inspektionsdaten geladen werden, deren Geocodes innerhalb eines vorbestimmten Umkreises des der Anzeigeeinrichtung (10) zugeordneten Geocodes liegen.

7. Verfahren nach einem der vorhergehenden Ansprüche, wobei nur jene Inspektionsdaten von der Speichereinrichtung (60) in den Arbeitsspeicher (13) geladen werden, die sich nicht bereits im Arbeitsspeicher befinden.

8. Verfahren nach einem der vorhergehenden Ansprüche, wobei nur solche Inspektionsdaten an der Anzeigeeinrichtung (10) angezeigt werden, die ein vorbestimmtes Anzeigekriterium erfüllen, wobei den Inspektionsdaten zumindest eines der vorbestimmten Anzeigekriterien zugeordnet ist.

9. Verfahren nach einem der vorhergehenden Ansprüche, wobei die Anzeigeeinrichtung (10) angepasst ist, Benutzereingaben entgegenzunehmen, wobei die entgegengenommenen Benutzereingaben in der Speichereinrichtung (60) gespeichert und einem Geocode, vorzugsweise dem aktuellen der Anzeigeeinrichtung (10) zugeordneten Geocode, zugeordnet werden.

10. Verfahren nach einem der vorhergehenden Ansprüche, wobei Positionsdaten einer sich im Kanal befindlichen Inspektions- und/oder Wartungseinrichtung (80) an die Anzeigeeinrichtung (10) übertragen werden, vorzugsweise über eine drahtlose Kommunikationsverbindung (90), und wobei die aktuelle Position der Inspektions- und/oder Wartungseinrichtung in dem Kanal an der Anzeigeeinrichtung (10) visualisiert wird.

11. Anzeigeeinrichtung (10), insbesondere tragbare Anzeigeeinrichtung, mit einem Arbeitsspeicher (13) und mit einer Bildaufnahmeeinrichtung (12), wobei die Anzeigeeinrichtung mit einer Speichereinrichtung (60), in der Inspektionsdaten einer Kanalinspektion gespeichert sind, wobei die Inspektionsdaten zumindest einen Geocode und dem Geocode zugeordnete Zustandsdaten des Kanals umfassen, koppelbar ist, und wobei die Anzeigeeinrichtung angepasst ist
- zumindest jene Inspektionsdaten von der Speichereinrichtung (60) in den Arbeitsspeicher (13) der Anzeigeeinrichtung (10) zu laden, deren Geocodes einem vorbestimmten Kriterium entsprechen,
- Umgebungsdaten an der Anzeigeeinrichtung (10) anzuzeigen, wobei die Umgebungsdaten von der Bildaufnahmeeinrichtung (12) bereitgestellt werden, und
- die geladenen Inspektionsdaten an der Anzeigeeinrichtung (10) anzuzeigen, wobei die von den Inspektionsdaten umfassten Zustandsdaten den angezeigten Umgebungsdaten überlagert werden.

12. Anzeigeeinrichtung nach dem vorhergehenden Anspruch, wobei die Anzeigeeinrichtung
- eine Einrichtung (11) zum Ermitteln von Geocodes aufweist, wobei die Einrichtung zum Ermitteln von Geocodes angepasst ist, den Geocode anhand von GPS-Daten, von Daten eines inertialen Navigationssystems, einer Triangulation von WLAN-Funkzellen, einer Triangulation von Mobilfunkzellen, oder Kombinationen hiervon zu bestimmen, und wobei das vorbestimmte Kriterium den von der Einrichtung (11) zum Ermitteln von Geocodes ermittelten Geocode umfasst, und/oder
- eine Einrichtung zum Ermitteln eines Neigungswinkels (α) der Anzeigeeinrichtung (10) aufweist, wobei das vorbestimmte Kriterium den Neigungswinkel (α) der Anzeigeeinrichtung (10) umfasst.

13. Anzeigeeinrichtung nach einem der beiden vorhergehenden Ansprüche, wobei die Anzeigeeinrichtung weiter angepasst ist, beim Laden der Inspektionsdaten von der Speichereinrichtung (60) in den Arbeitsspeicher (13) der Anzeigeeinrichtung (10) nur jene Inspektionsdaten zu laden, deren Geocodes innerhalb eines vorbestimmten Umkreises des von der Einrichtung (11) zum Ermitteln von Geocodes ermittelten Geocode liegen, wobei vorzugsweise nur jene Inspektionsdaten von der Speichereinrichtung (60) in den Arbeitsspeicher (13) geladen werden, die sich nicht bereits im Arbeitsspeicher befinden.

14. Inspektionssystem (80) zur Inspektion eines Kanals, wobei das Inspektionssystem angepasst ist, Zustandsdaten des Kanals und dazugehörige Geocodes zu erfassen und die erfassten Zustandsdaten zusammen mit den Geocodes in einer Speichereinrichtung (60) zu speichern, wobei die Zustandsdaten des Kanals ausgewählt sind aus der Gruppe zumindest umfassend Videobilder des Kanals, Bildaufnahmen des Kanals, Durchmesser des Kanals, Informationen über Seitenkanäle, Schadensinformationen, Neigung des Kanals, Kanalverlauf, Temperatur, und Kombinationen hiervon.

15. System, umfassend ein Inspektionssystem (80) nach Anspruch 14 und eine Anzeigeeinrichtung (10) nach einem der Ansprüche 11 bis 13.
